# EUROPEAN PATENT APPLICATION

(11) **EP 4 318 890 A1**
(43) Date of publication of application: **07.02.2024**
(21) Application number: 22780927.4
(22) Date of filing: 29.03.2022
(51) Int. Cl.: H02K 3/28

(54) **MOTOR**

(30) Priority: 31.03.2021 JP 2021059461
(71) Applicant: Minebea Mitsumi Inc., Kitasaku-gun, Nagano 389-0293 (JP)
(72) Inventor: NAKANO, Tomoaki, Kitasaku-gun, Nagano 389-0293 (JP)
(74) Representative: Zabel, Julia Elisabeth
(86) International application number: PCT/JP2022/015463
(87) International publication number: WO 2022/210716

(57) **Abstract**

A motor (1) is provided with a shaft (99), a rotor (90), and a stator (2). The stator (2) includes a stator core (10), insulating members (30, 60), and a first coil (40) and a second coil (50) which are wound around the insulating members (30, 60). The insulating members (30, 60) each have a projecting portion which projects in an axial direction. Each projecting portion includes a first projecting portion (35) extending in a radial direction, and a second projecting portion (3) extending in a circumferential direction. The first coil (41) is wound around one side (35al), in the circumferential direction, of the first projecting portion (35a), and a diametrically outer side of the second projecting portion (33ab). The second coil (56) is wound around the other side (35ab), in the circumferential direction, of the first projecting portion (35a).

## Description

### Technical Field

The present invention relates to a motor.

### Background Art

In a rotary electric machine such as a motor, a distributed winding technique forming a coil by winding a wire around a plurality of teeth (magnetic pole unit) is known.

### Citation List

### Patent Literature

Patent Document 1: JP 2010-246342 A
Patent Document 2: JP 2017-169419 A
Patent Document 3: JP 2003-333809 A
Patent Document 4: JP 2007-274808 A

### Summary of Invention

### Technical Problem

In a distributed winding coil, when a coil is wound around a magnetic pole unit by using a nozzle, for example, the windings may interfere with each other and may hinder the improvement of the space factor.

In one side view, an object is to provide a motor allowing to improve the space factor of distributed winding coils.

### Solution to Problem

In one aspect, a motor includes a shaft, a rotor, and a stator. The stator includes a stator core, an insulating member, and a first coil and a second coil wound around the insulating member. The insulating member includes a protrusion protruding in an axial direction. The protrusion includes a first protrusion extending in a radial direction and a second protrusion extending in a circumferential direction. The first coil is wound around a portion at one circumferential side of the first protrusion and a portion at an outer radial side of the second protrusion. The second coil is wound around a portion at the other circumferential side of the first protrusion.

According to one aspect, the space factor of the distributed winding coil can be improved.

### Brief Description of Drawings

FIG. 1 is a top view illustrating an example of a motor according to an embodiment.
FIG. 2 is a perspective view illustrating an example of a stator according to an embodiment.
FIG. 3 is a perspective view illustrating an example of attaching a second magnetic pole unit to a stator core according to an embodiment.
FIG. 4 is an exploded perspective view illustrating an example of a stator core and an insulator according to an embodiment.
FIG. 5 is a top view illustrating an example of a stator core according to an embodiment.
FIG. 6 is an enlarged perspective view illustrating an example of an insulator according to an embodiment.
FIG. 7 is a perspective view illustrating an example of winding a first coil according to an embodiment.
FIG. 8 is a perspective view illustrating another example of winding a first coil according to an embodiment.
FIG. 9 is a schematic diagram illustrating an example of the shape of a first coil according to an embodiment.
FIG. 10 is a perspective view illustrating an example of attaching a second coil to a stator core according to an embodiment.
FIG. 11 is a perspective view illustrating an example of a second coil attached to the stator core according to an embodiment.
FIG. 12 is a schematic diagram illustrating an example of the shape of a second coil according to an embodiment.
FIG. 13 is a perspective view illustrating an example of a stator core attached with a second coil according to an embodiment.
FIG. 14 is a perspective view illustrating an example of a second magnetic pole unit according to an embodiment.
FIG. 15 is an enlarged cross-sectional view illustrating the positional relationship between an insulator and a coil according to an embodiment.
FIG. 16 is an enlarged perspective view illustrating an example of the positional relationship between an insulator and a coil according to an embodiment.

### Description of Embodiments

Embodiments of the motor disclosed in the present application will be described in detail below based on the drawings. Note that in the drawings, the dimensional relationship of elements and the ratio of the elements may differ from reality. Among the drawings, parts having mutually different dimensional relationships and proportions may be included. In order to facilitate a description, each drawing may illustrate a coordinate system. In the coordinate system, an extending direction of a shaft 99 to be described below is defined as an axial direction and a rotation direction of a rotor 90 is defined as a circumferential direction.

### Embodiments

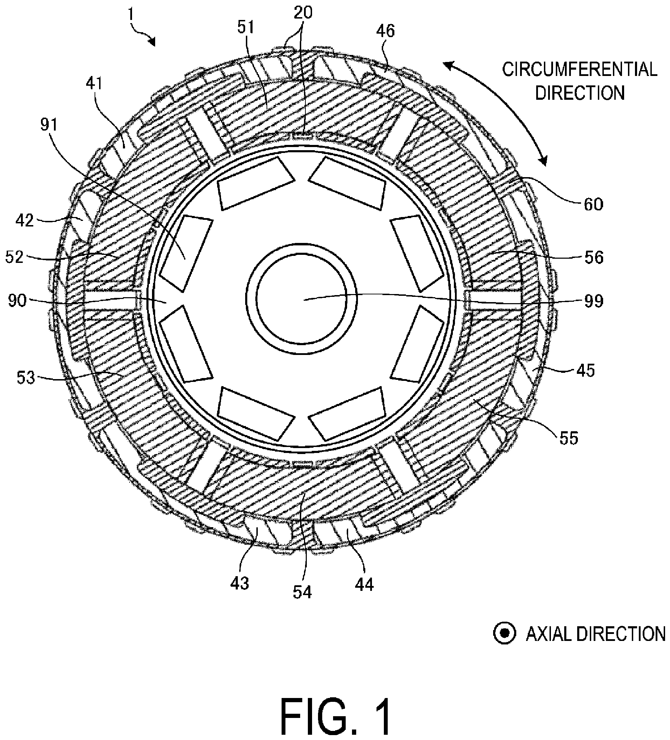

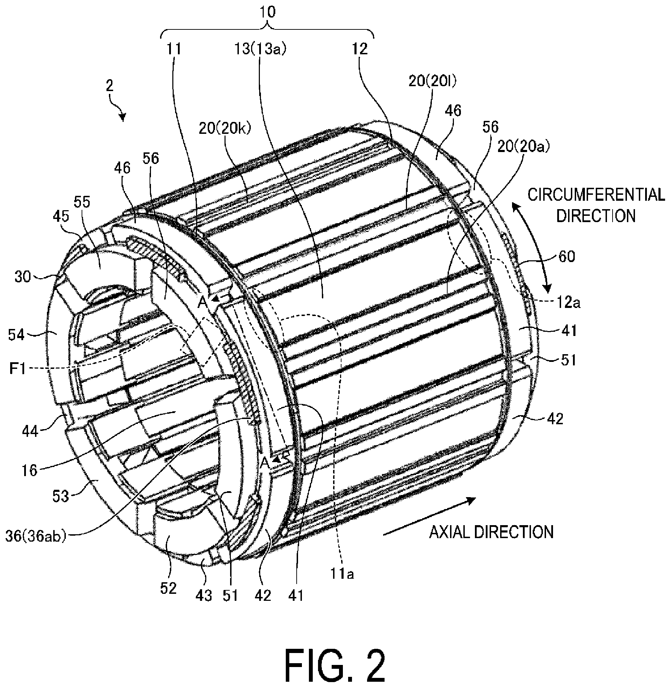

FIG. 1 is a top view illustrating an example of a motor according to an embodiment. FIG. 2 is a perspective view illustrating an example of a stator according to an embodiment. A motor 1 illustrated in FIG. 1 includes, for example, a stator 2 illustrated in FIG. 2, the rotor 90, and the shaft 99. The motor 1 described in the embodiment is an inner rotor-type brushless motor. At the motor 1, for example, the rotor 90 with a plurality of magnets 91 as components is disposed, and a rotating shaft 99 is coupled to this rotor 90. Additionally, the motor 1 is accommodated in a frame not illustrated, for example.

As illustrated in FIGS. 1 and 2, the stator 2 according to an embodiment includes a stator core 10, a plurality of second magnetic pole units 20, a pair of insulators 30 and 60, a plurality of first coils 41 to 46, and a plurality of second coils 51 to 56. In the following, a plurality of first coils 41 to 46, when expressed without distinction, may be described as first coils 40. Similarly, in the following, a plurality of second coils 51 to 56, when expressed without distinction, may be described as second coils 50. The insulators 30 and 60 are examples of insulating members. Further, in FIG. 1, the insulator 30 located at the axially opposite side (negative side) is not visible.

In an embodiment, the stator core 10 includes a pair of coupling parts 11 and 12, twelve first yoke parts 13, and twelve first magnetic pole units 16. The first magnetic pole unit 16 protrudes inward in a radial direction from the first yoke part 13 as illustrated in FIG. 2.

In the embodiment, the first coil 40 and the second coil 50 are formed by, for example, a round copper wire being wound by a nozzle winding. The first coils 40 and the second coils 50 are wound around the stator core 10 mounted with the insulators 30 and 60. Additionally, in the embodiment, the first coils 40 and the second coils 50 are distributed winding coils wound across the plurality of first magnetic pole units 16.

Further, in the embodiment, the first coils 40 and the second coils 50 are not wound around a second magnetic pole unit 20. The second magnetic pole unit 20 according to an embodiment is mounted, for example, after the first coils 40 and the second coils 50 are wound around the stator core 10. In the following, a plurality of the second magnetic pole units 20, when separately expressed, are sometimes described as second magnetic pole units 20a to 201, respectively.

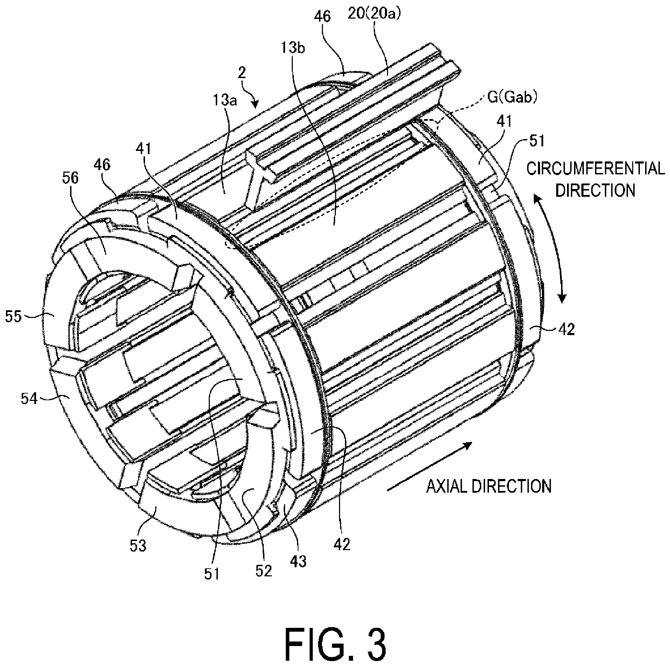

FIG. 3 is a perspective view illustrating an example of mounting the second magnetic pole unit to the stator core according to an embodiment. In the embodiment, the second magnetic pole unit 20 is mounted in a radial direction from the outside at a gap G formed between the two adjacent first yoke parts 13. For example, as illustrated in FIG. 3, the second magnetic pole unit 20a is mounted to a gap Gab formed between a first yoke part 13a and a first yoke part 13b.

When a second magnetic pole unit 20 is mounted after the first coils 40 and the second coils 50 are wound around in this way, the second magnetic pole units 20 do not interfere when the first coils 40 and the second coils 50 are wound around the stator core 10. This improves workability when winding a distributed winding coil.

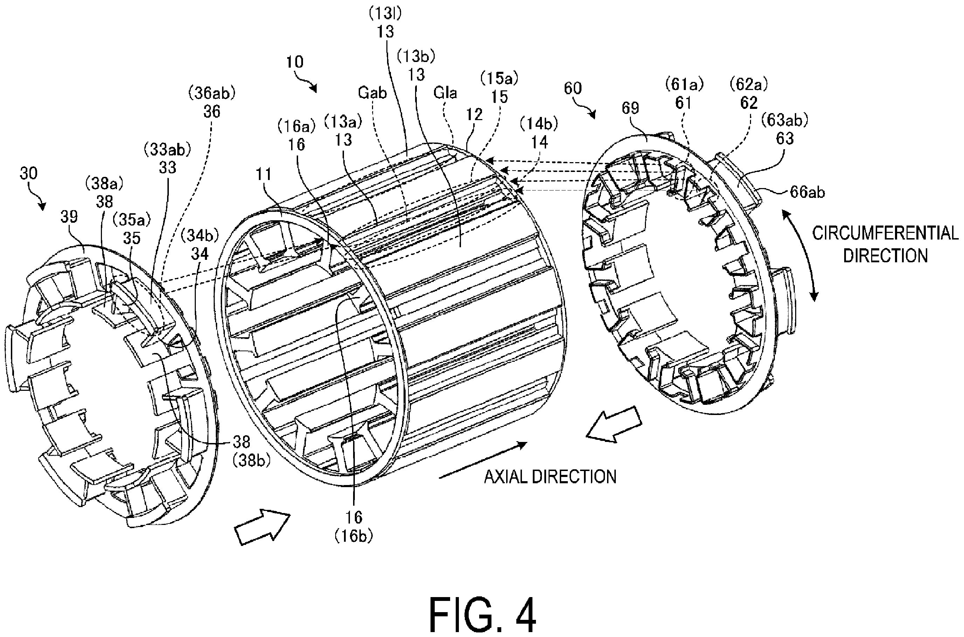

In the embodiment, the pair of insulators 30 and 60 are first mounted to the stator core 10. FIG. 4 is an exploded perspective view illustrating an example of the stator core and the insulators according to an embodiment. In the embodiment, the coupling parts 11 and 12 are annular members formed of a magnetic body, such as stainless steel or an electromagnetic steel plate. As illustrated in FIG. 4, the coupling parts 11 and 12 have approximately the same shape. The material of the coupling parts may be any material as long as the first yoke parts 13 can be coupled and held.

The first yoke parts 13 are members formed by, for example, stacking electromagnetic steel plates in the axial direction. As illustrated in FIG. 4, the plurality of first yoke parts 13 are disposed adjacent to each other in the circumferential direction. In the following, the plurality of first yoke parts 13, when expressed with distinction, may be described as the first yoke parts 13a to 131, respectively.

The end part at the negative axial side of the first yoke part 13 is coupled to the coupling part 11. Similarly, the end part at the positive axial side of the first yoke part 13 is coupled to a coupling part 12. For example, an end part 11a of a first yoke part 13a is coupled to the coupling part 11, and an end part 12a is coupled to the coupling part 12. That is, the twelve first yoke parts 13 are disposed side by side in the circumferential direction by the pair of coupling parts 11 and 12.

The plurality of first magnetic pole units 16 are formed integrally with the first yoke part 13 and are protrusions extending from the inner circumferential surface side of the first yoke part 13 inward in the radial direction. In the following, the plurality of first magnetic pole units 16, when expressed with distinction, may be expressed as the first magnetic pole units 16a to 16l, respectively.

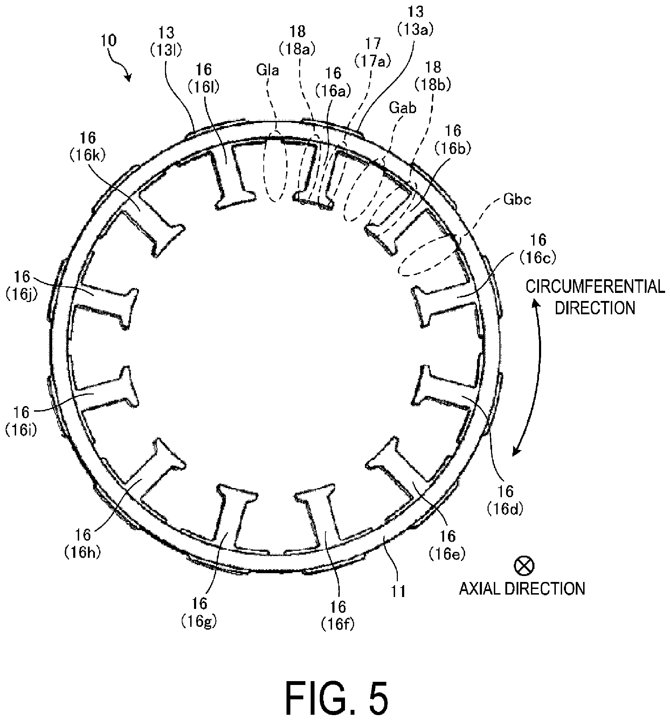

FIG. 5 is a top view illustrating an example of the stator core according to an embodiment. As illustrated in FIGS. 4 and 5, the first magnetic pole unit 16 according to an embodiment includes, for example, two end parts protruding in a circumferential direction at the tip side (inward in the radial direction).

As illustrated in FIGS. 4 and 5, the gap G is formed between two first yoke parts 13 adjacent in a circumferential direction. For example, the gap Gab described in FIG. 3 is formed between the first yoke part 13a and a first yoke part 13b, and a gap Gla is formed between a first yoke part 131 and the first yoke part 13a.

In addition, as illustrated in FIG. 4, the circumferential surface of each first yoke part 13 includes recessed parts 14 and 15 formed in the circumferential direction at both ends and partially recessed in a radial direction and extending in the circumferential direction. As illustrated in FIG. 4, the end face in the circumferential direction of a recessed part 15a and the end face in the circumferential direction of a recessed part 14b oppose each other across the gap Gab.

Also, as illustrated in FIG. 5, an end face 17 in the circumferential direction of the first magnetic pole unit 16 and an opposite end face 18 in the circumferential direction of the adjacent first magnetic pole unit 16 oppose each other across the gap G. For example, an end face 17a of the first magnetic pole unit 16a and an end face 18b of the first magnetic pole unit 16b oppose each other across the gap Gab.

In the embodiment, the insulator 30 is mounted to the stator core 10 from the axially negative side. Similarly, an insulator 60 is mounted to the stator core 10 from the axially positive side. The insulators 30 and 60 are formed of, for example, resin or the like.

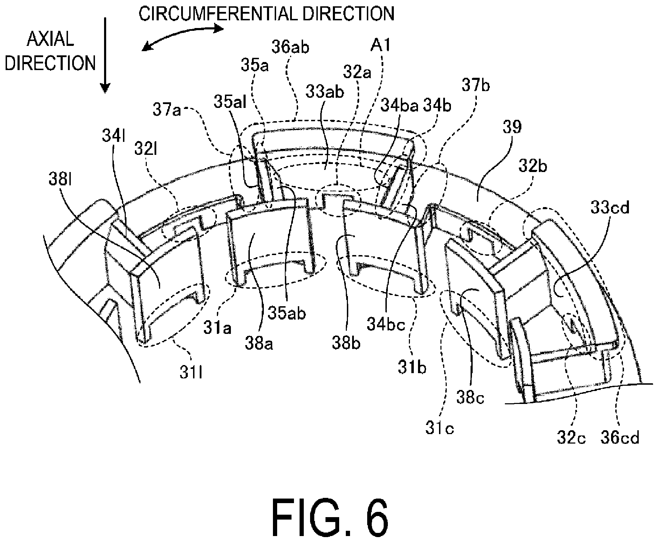

FIG. 6 is an enlarged perspective view illustrating an example of the insulator according to an embodiment. As illustrated in FIGS. 4 and 6, the insulator 30 according to an embodiment includes first recesses 31a to 311, second recesses 32a to 32l, second protrusions 33ab to 33kl, third protrusions 34b to 34l, first protrusions 35a to 35k, flange parts 36ab to 36kl, planar parts 37a to 37l, inner circumferential end parts 38a to 381, and a coupling part 39. The second protrusions 33ab to 33kl, the third protrusions 34b to 34l and the first protrusions 35a to 35k are examples of protrusions. The planar parts 37a to 37l are examples of planar parts.

The coupling part 39 is an annular member and covers the coupling part 11 of the stator core 10 from the circumferentially negative side. The twelve first recesses 31a to 311 cover the end parts at the negative axial side of the twelve first magnetic pole units 16a to 16l of the stator core 10, respectively, from the negative axial side. The twelve second recesses 32a to 32l contact the twelve second magnetic pole units 20a to 20l inserted into the stator core 10, respectively, at the circumferentially negative side. As described later, the axially central portions of the first magnetic pole units 16a to 16l are not covered with the first recesses 31a to 311, respectively. Further, circumferential end faces 21 and 22 of the second magnetic pole units 20a to 20l described later, are not covered with the second recesses 32a to 32l, respectively.

The first protrusions 35a to 35k and the third protrusions 34b to 34l protrude from the inner circumferential side of the coupling part 39 toward the inner circumferential side and the negative axial side. As illustrated in FIG. 6, for example, the first protrusion 35a includes in a circumferential direction an end face 35al opposing to one adjacent third protrusion 34l and an end face 35ab opposing to the other adjacent third protrusion 34b. Similarly, for example, the third protrusion 34b includes an end face 34ba opposing to one adjacent first protrusion 35a and an end face 34bc opposing to the other adjacent first protrusion 35c.

The second protrusions 33ab to 33kl are formed at positions coupling the outer circumferential end faces of the first protrusions 35a to 35k and the outer circumferential end faces of the third protrusions 34b to 34l, respectively. The second protrusions 33ab to 33kl are formed to extend in a circumferential direction, for example, along the inner circumferential side of the coupling part 39. For example, the second protrusion 33ab is formed between the first protrusion 35a and the third protrusion 34b.

The flange parts 36ab to 36kl extend in a radial direction outward from the end part at the negative axial side of the second protrusions 33ab to 33kl, respectively. The end parts at the outer circumferential side of the flange parts 36ab to 36kl, for example, are located inward of the outer circumferential side of the coupling part 39 in a radial direction.

The planar parts 37a to 37l are disposed from the inner circumferential side of the coupling part 39 to the radial inner circumferential side. The negative axial side surfaces of the planar parts 37a to 37l are formed so as to be approximately flush with, for example, the coupling part 39. In the embodiment, the planar parts 37a to 37l are located in a circumferential direction opposite to the direction of the second protrusions 33ab to 33kl extending, respectively. For example, the planar part 37a does not oppose to either of the second protrusion 33kl or 33ab in a radial direction.

The inner circumferential end parts 38a to 381 protrude inward in a radial direction from either of the first protrusions 35a to 35k or from either of the third protrusions 34b to 34l, respectively, and extend at both circumferential sides. For example, the inner circumferential end part 38a protrudes from the first protrusion 35a, and an inner circumferential end part 38b protrudes from the third protrusion 34b. The inner circumferential end parts 38a to 38l are located between the second coils 51 to 56 and the rotor 90, respectively.

Additionally, in the embodiment, the insulator 60 includes first recesses 61a to 611, second recesses 62a to 62l, second protrusions 63ab to 63kl, third protrusions 64a to 64k, first protrusions 65b to 65l, flange parts 66ab to 66kl, planar parts 67a to 67l, inner circumferential end parts 68a to 68l, and coupling part 69.

For example, a first recess 61a covers the first magnetic pole unit 16a of the stator core 10, as illustrated by arrow in FIG. 4. A second recess 62a contacts the second magnetic pole unit 20a inserted into the gap Gab of the stator core 10, as illustrated by arrow in FIG. 4. It should be noted that the first protrusion 35a of the insulator 30 in an axial direction opposes to a third protrusion 34a of the insulator 60, and the third protrusion 34b of the insulator 30 in an axial direction opposes to the first protrusion 65b of the insulator 60. In addition, as illustrated in FIG. 4, in the embodiment, the insulator 60 has approximately the same shape as the insulator 30, so that a detailed description is omitted. In this case, the stator core 10 mounted with the insulators 30 and 60 according to an embodiment has a nearly symmetrical shape in an axial direction.

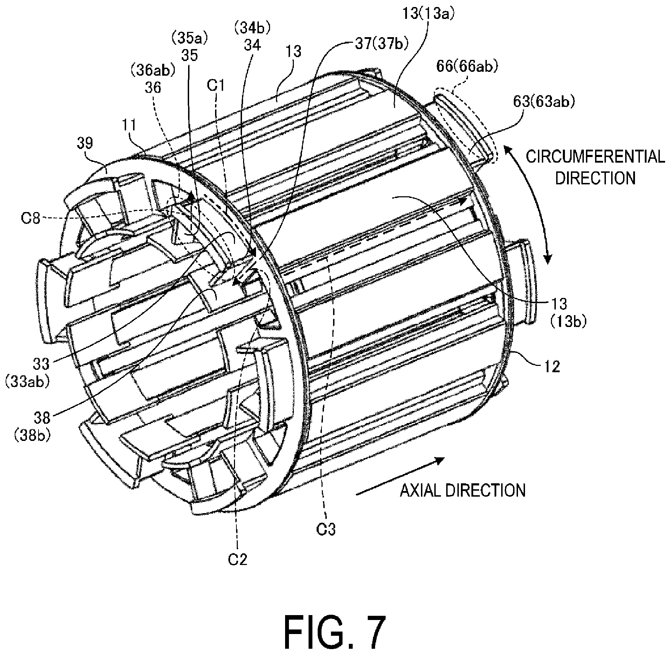

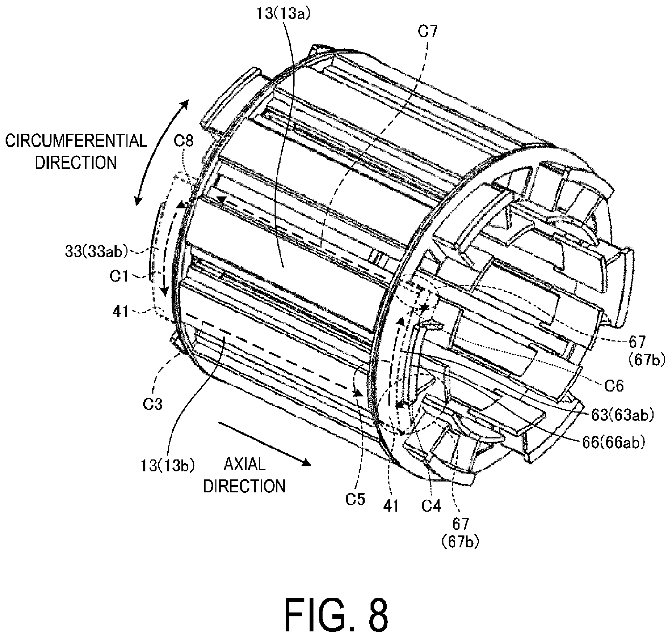

The first coils 40 and the second coils 50 are wound around the stator core 10 mounted with the insulators 30 and 60, as illustrated in FIGS. 7 to 13. FIGS. 7 and 8 are perspective views illustrating an example of winding the first coil according to an embodiment. For example, a conducting wire forming the first coil 41 is wound clockwise in a circumferential direction along the second protrusion 33ab of the insulator 30, as illustrated by arrow C1 in FIG. 7.

The conducting wire is then wound inward in a radial direction along a planar part 37b as illustrated by arrow C2, and then wound toward the positive axial side along the first magnetic pole unit 16b of the stator core 10 as illustrated by arrow C3. The conducting wire is then wound in a radial direction outward along a planar part 67b of the insulator 60 as illustrated by arrow C4 in FIG. 8, and then wound clockwise in a circumferential direction along a second protrusion 63ab as illustrated by arrow C5.

The conducting wire is then wound inward in a radial direction along a planar part 67a as illustrated by arrow C6, and then wound toward the negative axial side along the first magnetic pole unit 16a as illustrated by arrow C7. The conducting wire is then wound in a radial direction outward along the planar part 37a of the insulator 30 as illustrated by arrow C8, and then wound back to the arrow C1 and repeatedly wound around. Thus, the first coil 41 illustrated in FIG. 8 is formed.

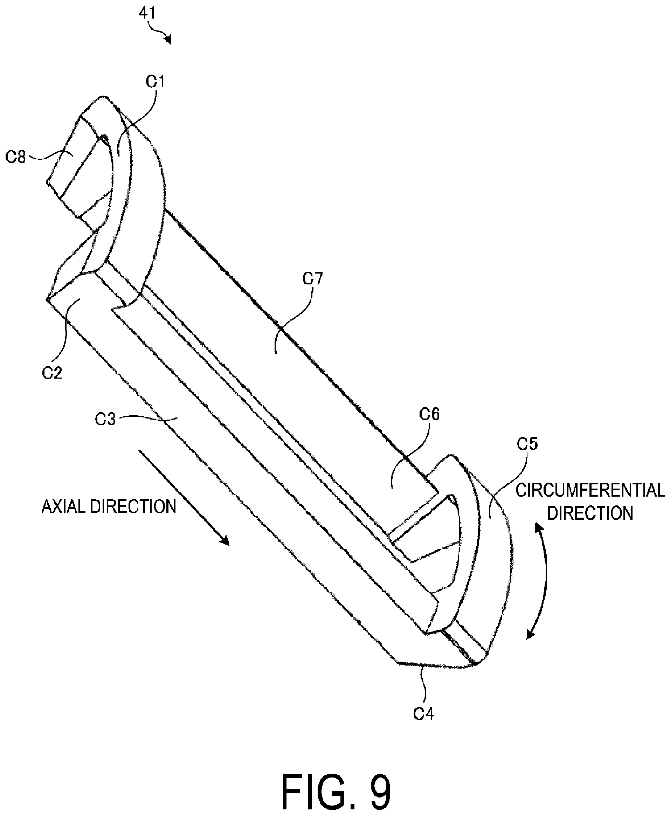

The first coil 40 thus wound has, for example, a shape as illustrated in FIG. 9. FIG. 9 is a schematic diagram illustrating an example of the shape of the first coil according to an embodiment. As illustrated in FIG. 9, the first coil 40 includes portions C1 and C5 extending in a circumferential direction, portions C2, C4, C6 and C8 extending in a radial direction, and portions C3 and C7 extending in an axial direction. The first coil 40 has an approximately U-shape in top view. That is, the first coil 41 includes portions C1 and C5 opposing to each other in an axial direction and are wound in opposite directions to each other.

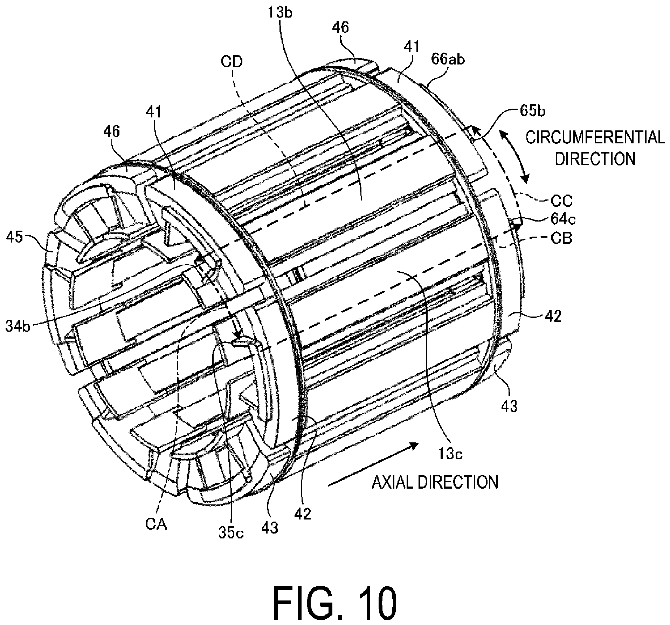

The second coils 50 are further wound around the stator core 10 with the first coils 41 to 46 wound around. FIG. 10 is a perspective view illustrating an example of attaching the second coils to the stator core according to an embodiment. For example, the conducting wire for forming the second coil 51 is wound around clockwise in a circumferential direction from the third protrusion 34b of the insulator 30 to the first protrusion 35c, as illustrated by arrow CA in FIG. 10. At this time, as illustrated in FIG. 10, the conducting wire illustrated by arrow CA intersect three-dimensionally with the first coils 41 and 42.

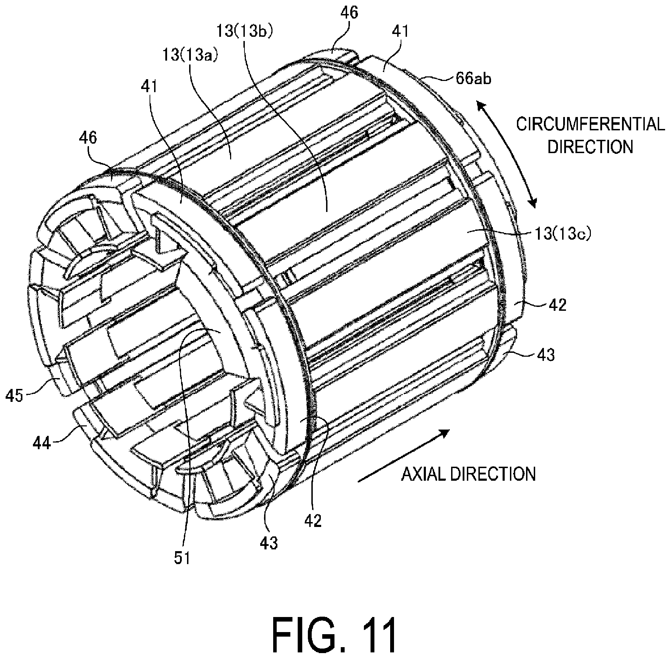

The conducting wire is then wound toward the positive axial side along a first magnetic pole unit 16c of the stator core 10, as illustrated by arrow CB. The conducting wire is then wound clockwise in a circumferential direction from a third protrusion 64c of the insulator 60 to a first protrusion 65b, as illustrated by arrow CC in FIG. 10. The conducting wire is then wound back to arrow CA and repeatedly wound around. The second coils 51 illustrated in FIG. 11 are formed. FIG. 11 is a perspective view illustrating an example of a second coil attached to the stator core according to an embodiment.

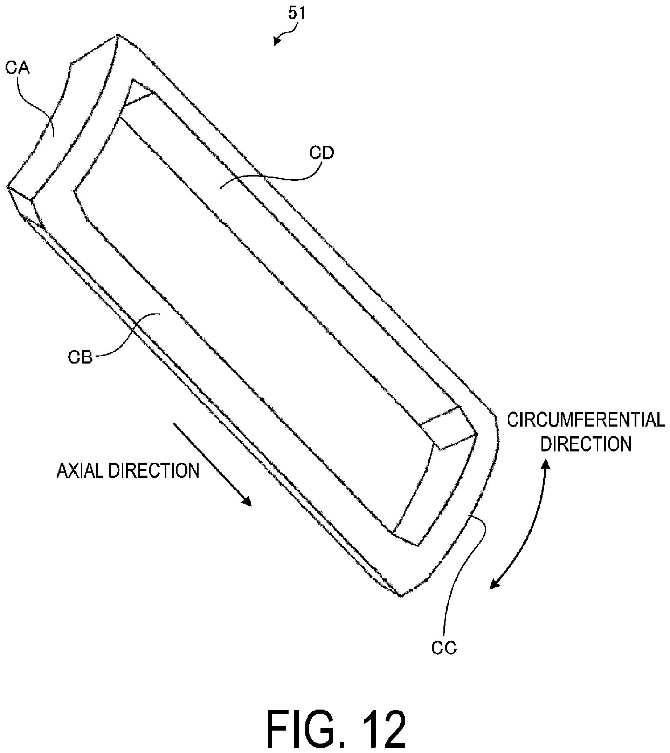

The first coil 40 thus wound has, for example, a shape as illustrated in FIG. 12. FIG. 12 is a schematic diagram illustrating an example of the shape of the second coil according to an embodiment. As illustrated in FIG. 12, the second coil 50 includes portions CA and CC extending in a circumferential direction and portions CB and CD extending in an axial direction. That is, the second coil 51 also includes the portions CA and CC opposing to each other in an axial direction and are wound in opposite directions to each other.

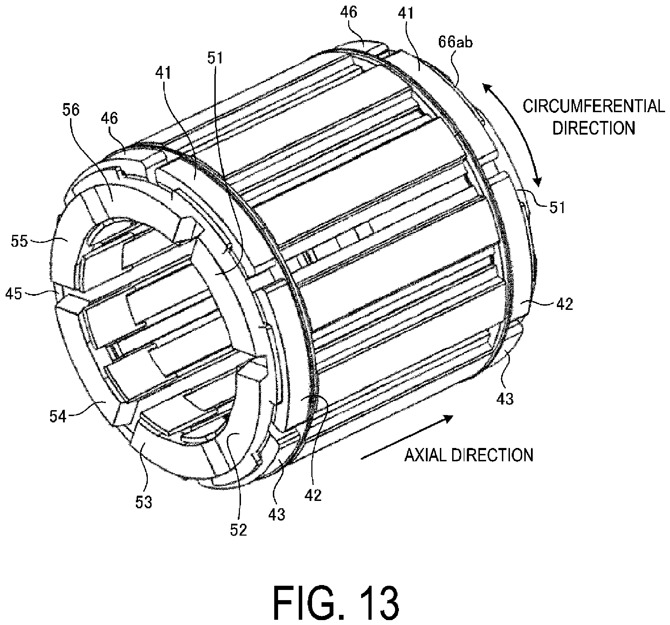

An example of the stator core 10 with the first coils 41 to 46 and the second coils 51 to 56 wound around in this way is illustrated in FIG. 13. FIG. 13 is a perspective view illustrating an example of the stator core attached with the second coil according to an embodiment. As illustrated in FIGS. 8 to 10, and 13, the first coils 41 to 46 are located in a radial direction outward from the second coils 51 to 56, at least at circumferentially extending portions C1 and C5.

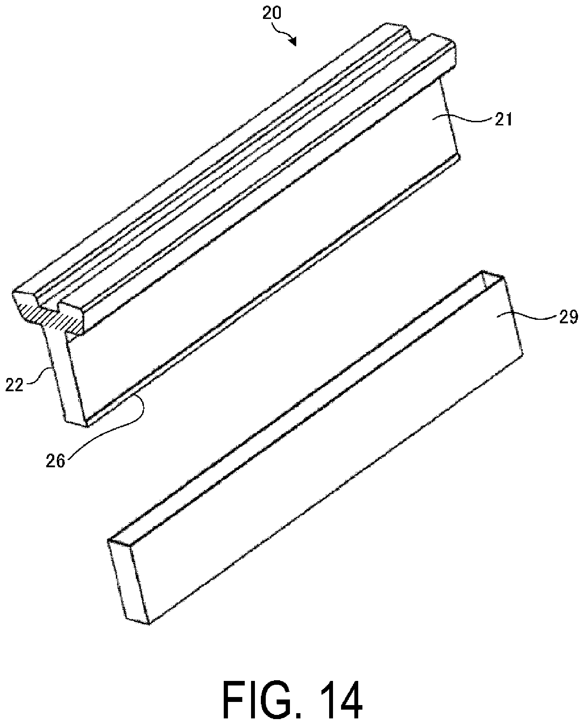

Then, the stator 2 illustrated in FIG. 2 is formed by further mounting a plurality of the second magnetic pole units 20 illustrated in FIG. 14 to the stator core 10 with the first coil 40 and the second coils 50 illustrated in FIG. 13 wound around. FIG. 14 is a perspective view illustrating an example of the second magnetic pole unit according to an embodiment. In the embodiment, the second magnetic pole unit 20 is a member formed by, for example, stacking electromagnetic steel plates in an axial direction. The second magnetic pole unit 20 includes a protrusion 26 extending from the inner circumferential surface side inward in a radial direction. As illustrated in FIG. 14, the protrusion 26 of the second magnetic pole unit 20 according to an embodiment has a shape without an end part protruding in a circumferential direction, for example, at the tip side (inside in the radial direction). The protrusion 26 includes the two end faces 21 and 22 in a circumferential direction.

In addition, in the embodiment, the second magnetic pole unit 20 is covered with the insulators 30 and 60 only partially at both end parts in the axial direction. For example, as illustrated in FIG. 14, only the portion indicated by the shaded line at the axial end face of the second magnetic pole unit 20 is covered by the insulators. In this case, the second magnetic pole unit 20 may further include an insulator film 29 covering the end faces, as illustrated in FIG. 14. The insulator film 29 is, for example, a thermal contraction film with insulating properties. In this case, both end faces 21 and 22 of the protrusion 26 may each include a recess as illustrated in FIG. 14.

In the embodiment, the second magnetic pole unit 20 is disposed by, for example, being press-fitted into the gap G formed between two adjacent first magnetic pole units 16. Specifically, the protrusion 26 of the second magnetic pole unit 20 is press-fitted into the gap G from the outside in a radial direction. For example, the second magnetic pole unit 20a illustrated in FIG. 3 is disposed in the gap Gab between the first magnetic pole unit 16a and the first magnetic pole unit 16b adjacent to the first magnetic pole unit 16a in a circumferential direction.

As described above, the motor 1 according to an embodiment includes the shaft 99, the rotor 90, the stator core 10, the insulating members 30, 60, and the first coils 40 and the second coils 50 wound around the insulating members 30, 60. The insulating members 30, 60 include protrusions protruding in an axial direction. Protrusions 33, 34, and 35 include the first protrusion 35 extending in a radial direction and the second protrusion 33 extending in a circumferential direction. The first coil 41 is wound around the end face 35al at one circumferential side (a portion at one circumferential side of the first protrusion 35a) and the portion at the outer radial side of the second protrusion 33ab. A second coil 56 is wound around the end face 35ab at the other circumferential side (a portion at the other circumferential side of the first protrusion 35a). Further, the stator core 10 may include a plurality of first magnetic pole units 16a to 16l, and the first coils 40 and the second coils 50 may be wound across at least one or more first magnetic pole units 16a to 16l. With such a configuration, the space factor of the distributed winding coil can be improved.

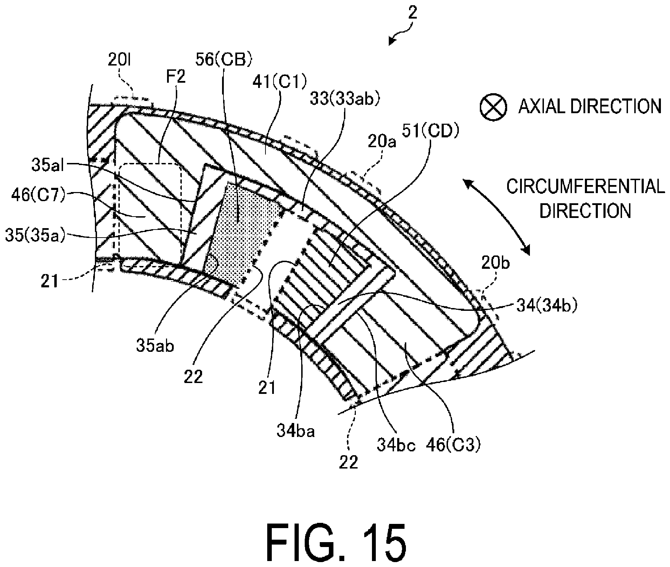

In addition, the first coils 40 and the second coils 50 are disposed at positions at least partially overlapping with each other in an axial direction. For example, the second coil 56 is disposed in the portion illustrated in frame F1 of FIG. 2. On the other hand, in FIG. 15 illustrating a cross section with different axial position, the first coil 41 is disposed in frame F2 located at the radial and circumferential position corresponding to a frame F1 in FIG. 2. FIG. 15 is an enlarged cross-sectional view illustrating the positional relationship between the insulator and the coil according to an embodiment. FIG. 15 illustrates a cross section cut by line A-A in FIG. 2. In FIG. 15, the second magnetic pole units 20a, 20b and 20l not existing in the cross section illustrated at line A-A in FIG. 2, are illustrated by broken lines for convenience.

In the embodiment, the first coil 40 and the second coil 50 are disposed and intersect three-dimensionally. Thus, as described above, the first coil 41 and the second coil 56 are disposed to overlap in an axial direction as described above by using FIGS. 2 and 15. The second coil 51 and 56 oppose to each other sandwiching in a circumferential direction the second magnetic pole unit 20a, as illustrated in FIG. 15.

Additionally, in the embodiment, the insulating member 30 includes the planar part 37 extending in a radial direction. The first coil 40 is wound along a planar part 37. In other words, the first coil 40 is disposed on the planar part 37. Further, the first protrusion 35 protrudes more than the planar part 37 in an axial direction. For example, as illustrated in FIG. 6, the first protrusion 35a of the insulator 30 extends to the negative axial side of the planar part 37a. With such a configuration, the first coil 41 wound at one circumferential side of the first protrusion 35a and the outer radial side of the second protrusion 33ab, and the second coil 56 wound at the other circumferential side of the first protrusion 35a, intersect three-dimensionally.

The insulating member 30 also includes a third protrusion 34 extending in a radial direction. The second protrusion 33 is formed between the radially outer end part of the first protrusion 35 and the end part of the radially outer side of the third protrusion 34. At this time, the end face 35ab at the other circumferential side of the first protrusion 35a and the end face 34ba at one circumferential side of the third protrusion 34b oppose to each other in a circumferential direction. In this case, the planar part (37a, 37b) may be formed only at the 35al and 34bc sides, opposite to the direction extending the second protrusion (33ab) in a circumferential direction. For example, the planar part 37a is not formed at a position A1 opposing to the second protrusion 33ab in a radial direction, as illustrated in FIG. 6. With such a configuration, the planar part 37 does not interfere with winding the second coil 51 and the second coil 56 formed between the first protrusion 35a and the third protrusion 34b opposing to each other in a circumferential direction.

The second protrusion 33 may also further include a flange part 36 protruding in a radial direction. In this case, the flange part 36 protrudes more outward in an axial direction than the end part in the axial direction of the first protrusion 35 and the third protrusion 34, and protrudes more outward in a radial direction than the end part in the radial direction of the first protrusion 35 and the third protrusion 34. In this case, the flange part 36 is positioned in an axial direction between the end part in the axial direction of the first coil 40 and the end part in the axial direction of the second coil 50. In addition, the second protrusion 33 may be located in a radial direction between the end part in the radial direction of the first coil 40 and the end part in the radial direction of the second coil 50.

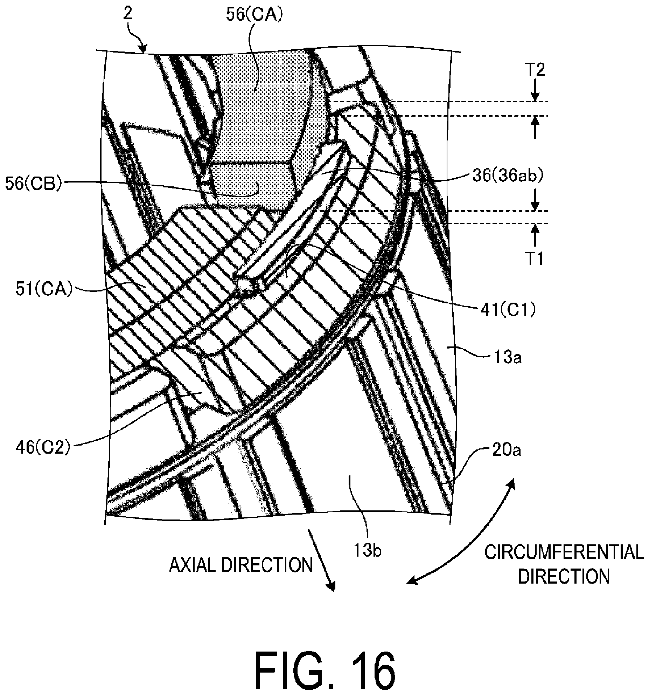

FIG. 16 is an enlarged perspective view illustrating an example of the positional relationship between the insulator and the coil according to an embodiment. In such a configuration, the flange part 36ab is positioned in an axial direction between the end part C1 in the axial direction of the first coil 41 and the end part CA in the axial direction of the second coils 56, 51. The second protrusion 33ab is positioned in a radial direction between the end part C1 in the radial direction of the first coil 41 and the end part CA in the radial direction of the second coil 50.

In this case, as illustrated in FIG. 16, the flange part 36ab is located in an axial direction between the end part C1 in the axial direction of the first coil 41 and the end part CA in the axial direction of the second coil 56. In this case, a gap T2 corresponding to a thickness T1 of the flange part 36ab is formed between the first coil 41 and the second coil 56. Thus, when the second coil 56 is wound, axial interference with the first coil 41 is prevented by the flange part 36ab.

Additionally, as illustrated in FIG. 16, the second protrusion 33ab of the insulator 30 is located in a radial direction between the end part C1 in the radial direction of the first coil 41 and the end part CB in the radial direction of the second coil 56. Thus, when the second coils 51 and 56 are wound, radial interference with the first coil 41 is prevented by the second protrusion 33ab.

As described above, in the embodiment, interference between the first coil and the second coil is prevented in any of the axial, radial and circumferential directions by the insulator with the protrusion. With such a configuration, the space factor of the distributed winding coil can be improved.

In addition, the motor 1 may further include a plurality of the second magnetic pole units 20, each disposed at the gaps G formed between the plurality of first magnetic pole units 16 in a circumferential direction adjacent at the stator core 10. In this case, of the second magnetic pole units 20, the second magnetic pole unit 20a is disposed in the first gap Gab formed between a pair of second protrusions 33ab and 63ab opposing to each other in an axial direction. The second magnetic pole unit 20a in a circumferential direction opposes to the two second coils 56 and 51 adjacent to each other. In addition, of the second magnetic pole units 20, the second magnetic pole unit 20b is disposed in a second gap Gbc different from the first gap Gab, and opposes in a circumferential direction to the two first coils 41 and 42 adjacent to each other.

For example, the second magnetic pole unit 20a disposed at the first gap Gab, illustrated in FIG. 3, opposes in a circumferential direction to the two second coils 56 and 51 adjacent to each other, as illustrated by broken lines in FIG. 15. More specifically, one end face 21 of the protrusion 26 of the second magnetic pole unit 20a opposes to the second coil 51, and the other end face 22 opposes to the second coil 56.

Similarly, the end face 22 of the protrusion 26 of the second magnetic pole unit 20b disposed at the second gap Gbc in FIG. 3 opposes to the second coil 51, as illustrated by the broken line in FIG. 15, and the end face 21 of the protrusion 26 of the second magnetic pole unit 20l opposes to the second coil 56. In such a configuration, the second magnetic pole unit 20 does not interfere with the winding of the first coils 40 and the second coils 50.

### Modification

The configuration according to the embodiment has been described above, but embodiments are not limited to this embodiment. For example, the second magnetic pole unit 20 may be insulated by an insulating coating or the like in place of the insulator film 29 as illustrated in FIG. 14. In this case, the end faces 21 and 22 of the protrusion 26 of the second magnetic pole unit 20 need not include the recess illustrated in FIG. 14.

In the embodiments, the configuration with each coil wound across the two first magnetic pole units adjacent to each other is described, but embodiments are not limited to these embodiments. For example, the coils may be wound across the two non-adjacent first magnetic pole units 16, or each may be wound around a separate first magnetic pole unit 16. Thus, the disposition of the first magnetic pole unit 16 with the coil to be wound around may be adjusted from the viewpoint of workability of the coil placement, or balance of the center of gravity of the stator, or the like. Even in this case, since the second magnetic pole unit 20 is mounted after the coils are mounted, workability during the coil mounting can be improved.

Further, for example, the second magnetic pole unit 20 may be disposed in the gap G by a method other than press-fitting. The coupling parts 11 and 12 of the stator core 10 may be provided either alone or at locations other than both end parts in the axial direction.

The motor according to an embodiment is, for example, an inner rotor-type brushless motor, but not limited to this motor, and at the outer rotor-type motor, the stator core 10 and the second magnetic pole unit 20 according to the embodiments may be adopted. The stator core 10 and the second magnetic pole unit 20 may be adopted in a rotary electric machine other than a motor, such as a generator.

Although the present invention has been described above based on the embodiment and each modification, the present invention is not limited to the embodiment and each modification. It goes without saying that various modifications are possible without departing from the gist of the present invention. Various modifications that do not depart from such a gist are also included in the technical scope of the present invention, and this is apparent to those skilled in the art from the description of the claims.

### Reference Signs List

1 Motor, 2 Stator, 10 Stator core, 11, 12 Coupling part, 13 (13a to 13l) First yoke part, 16 (16a to 16l) First magnetic pole unit (teeth), 20 (20a to 20l) Second magnetic pole unit (teeth), 30, 60 Insulator, 33 (33ab to 33kl), 63 (63ab to 63kl) Second protrusion, 34 (34b to 34l), 64 (64a to 64k) Third protrusion, 35 (35a to 35k), 65 (65b to 65l) First protrusion, 40 (41 to 46) First coil, 50 (51 to 56) Second coil, 90 Rotor, 99 Shaft

## Claims

1. A motor comprising:
a shaft;
a rotor; and
a stator, wherein
the stator includes
a stator core,
an insulating member, and
a first coil and a second coil wound around the insulating member,
the insulating member includes a protrusion protruding in an axial direction,
the protrusion includes a first protrusion extending in a radial direction and a second protrusion extending in a circumferential direction,
the first coil is wound around a portion at one circumferential side of the first protrusion and a portion at an outer radial side of the second protrusion, and
the second coil is wound around a portion at the other circumferential side of the first protrusion.

2. The motor according to claim 1, wherein
the insulating member includes a planar part extending in a radial direction, and
the first protrusion protrudes more in an axial direction than the planar part.

3. The motor according to claim 2, wherein
in the circumferential direction, the planar part is formed only at a side opposite to a direction of the second protrusion extending.

4. The motor according to any one of claims 1 to 3, wherein
the first coil and the second coil are partially disposed in an overlapping position in an axial direction.

5. The motor according to any one of claims 1 to 4, wherein
the insulating member further includes a third protrusion extending in a radial direction,
the second protrusion is formed between an end part at an outer radial side of the first protrusion and an end part at an outer radial side of the third protrusion, and
an end face at the other circumferential side of the first protrusion and an end face at one circumferential side of the third protrusion oppose to each other in a circumferential direction.

6. The motor according to claim 5, wherein
the second protrusion further includes a flange part protruding in a radial direction,
the flange part protrudes more outward in an axial direction than respective end parts in the axial direction of the first protrusion and the third protrusion, and protrudes more outward in a radial direction than end parts in the radial direction of the first protrusion and the third protrusion.

7. The motor according to claim 6, wherein
the flange part is positioned in an axial direction between an end part in the axial direction of the first coil and an end part in the axial direction of the second coil, and
the second protrusion is positioned in a radial direction between an end part in the radial direction of the first coil and an end part in the radial direction of the second coil.
1.

8. The motor according to any one of claims 1 to 7, wherein
The stator core includes a plurality of first magnetic pole units, and
the first coil and the second coil are wound across at least one or more of the first magnetic pole units.

9. The motor according to claim 8, wherein
the stator core further includes a plurality of second magnetic pole units disposed at a plurality of gaps, the plurality of gaps being formed between the plurality of first magnetic pole units adjacent in a circumferential direction,
at least one of the plurality of second magnetic pole units is disposed at a first gap among the plurality of gaps, the first gap being formed between a pair of the second protrusions opposing in an axial direction, and the at least one of the plurality of second magnetic pole units opposes in a circumferential direction to two of the second coils adjacent to each other, and
at least one of the plurality of second magnetic pole units is disposed at a second gap among the plurality of gaps, the second gap being different from the first gap (Gab), and the at least one of the plurality of second magnetic pole units opposes in a circumferential direction to two of the first coils adjacent to each other.
